# EUROPÄISCHE PATENTSCHRIFT

(11) **EP 4 565 425 B1**
(45) Veröffentlichungstag und Bekanntmachung des Hinweises auf die Patenterteilung: **08.07.2026**
(21) Anmeldenummer: 23745530.8
(22) Anmeldetag: 25.07.2023
(51) Int. Cl.: B32B 17/10, B32B 3/26, B60J 1/02, B60K 35/00, G02B 27/01, H05B 3/84

(54) **VERBUNDSCHEIBE MIT MEHREREN REFLEXIONSBEREICHEN UND KEILFÖRMIGER ZWISCHENSCHICHT**
LAMINATED GLASS WITH MULTIPLE REFLECTIVE AREAS AND WEDGE-SHAPED INTERMEDIATE LAYER
VITRE COMPOSITE POURVUE D'UNE PLURALITÉ DE ZONES RÉFLÉCHISSANTES ET D'UNE COUCHE INTERMÉDIAIRE CUNÉIFORME

(30) Priorität: 03.08.2022 EP 22188420
(43) Veröffentlichungstag der Anmeldung: 11.06.2025
(73) Patentinhaber: Saint-Gobain Sekurit France, 60150 Thourotte (FR)
(72) Erfinder: GOMER, Andreas, 52134 Herzogenrath (DE); ARENDT, Sebastian, 52134 Herzogenrath (DE); CAPPUCCILLI, Michele, 52134 Herzogenrath (DE)
(74) Vertreter: SGR Germany-Patents
(86) Internationale Anmeldenummer: PCT/EP2023/070549
(87) Internationale Veröffentlichungsnummer: WO 2024/028154

(56) Entgegenhaltungen:
- WO-A1-2021/213884
- WO-A1-2022/073894
- WO-A1-2023/052228
- DE-U1- 202023 100 272

## Beschreibung

Die Erfindung betrifft eine Verbundscheibe für eine Projektionsanordnung, ein Verfahren zu deren Herstellung, deren Verwendung und eine Projektionsanordnung mit der Verbundscheibe.

Moderne Automobile werden in zunehmendem Maße mit sogenannten Head-Up-Displays (HUDs) ausgestattet. Mit einem Projektor, typischerweise im Bereich des Armaturenbretts, werden Bilder auf den HUD-Bereich der Windschutzscheibe projiziert, dort reflektiert und vom Fahrer als virtuelles Bild (von ihm aus gesehen) hinter der Windschutzscheibe wahrgenommen. So können wichtige Informationen in das Blickfeld des Fahrers projiziert werden, beispielsweise die aktuelle Fahrtgeschwindigkeit, Navigations- oder Warnhinweise, die der Fahrer wahrnehmen kann, ohne seinen Blick von der Fahrbahn wenden zu müssen. Head-Up-Displays können so wesentlich zur Steigerung der Verkehrssicherheit beitragen.

Bei den vorstehend beschriebenen Head-Up-Displays tritt das Problem auf, dass das virtuelle Bild an beiden Oberflächen der Windschutzscheibe reflektiert wird. Dadurch nimmt der Fahrer nicht nur das gewünschte Hauptbild wahr, welches durch die Reflexion an der innenraumseitigen Oberfläche der Windschutzscheibe hervorgerufen wird (Primärreflexion). Der Fahrer nimmt auch ein leicht versetztes, in der Regel intensitätsschwächeres Nebenbild wahr, welches durch die Reflexion an der außenseitigen Oberfläche der Windschutzscheibe hervorgerufen wird (Sekundärreflexion). Letzteres wird gemeinhin auch als Geisterbild ("Ghost") bezeichnet. Dieses Problem wird gemeinhin dadurch gelöst, dass die reflektierenden Oberflächen mit einem bewusst gewählten Winkel zueinander angeordnet werden, so dass Hauptbild und Geisterbild überlagert werden, wodurch das Geisterbild nicht mehr störend auffällt.

Windschutzscheiben bestehen aus zwei Glasscheiben, welche über eine thermoplastische Folie miteinander laminiert sind. Sollen die Oberflächen der Glasscheiben wie beschrieben in einem Winkel angeordnet werden, so ist es üblich, eine thermoplastische Folie mit nichtkonstanter Dicke zu verwenden. Man spricht auch von einer keilförmigen Folie oder Keilfolie. Der Winkel zwischen den beiden Oberflächen der Folie wird als Keilwinkel bezeichnet. Der Keilwinkel kann über die gesamte Folie konstant (lineare Dickenänderung) sein oder sich positionsabhängig ändern (nichtlineare Dickenänderung). Verbundgläser mit Keilfolien sind beispielsweise aus WO2009/071135A1, EP1800855B1, WO2021213884A1 oder EP1880243A2 bekannt.

Windschutzscheiben weisen außer dem transparenten Durchsichtbereich üblicherweise einen opaken Maskierungsbereich mit einer opaken Schicht auf, durch den keine Durchsicht möglich ist. Der Maskierungsbereich ist typischerweise in einem umlaufenden Randbereich der Windschutzscheibe angeordnet und umrandet den Durchsichtbereich. Der opake Maskierungsbereich dient in erster Linie dazu, den zur Verklebung der Windschutzscheibe mit der Fahrzeugkarosserie verwendeten Klebstoff vor UV-Strahlung zu schützen. Der Maskierungsbereich wird typischerweise durch einen schwarzen Abdeckdruck auf der zur Zwischenschicht hingewandten Oberfläche der Außenscheibe ausgebildet.

Es ist möglich, auch im Maskierungsbereich ein virtuelles Bild zu erzeugen. Es wird also auch der Maskierungsbereich durch einen Projektor bestrahlt, und das Licht dort reflektiert, wodurch eine Anzeige für den Fahrer erzeugt wird. So können beispielsweise Informationen, die bislang im Bereich des Armaturenbretts angezeigt wurden, wie die Uhrzeit, Fahrtgeschwindigkeit, Motordrehzahl oder Angaben eines Navigationssystems, oder auch das Bild einer rückwärts gerichteten Kamera, welches die klassischen Außenspiegel oder Rückspiegel ersetzt, auf praktische und ästhetisch ansprechende Weise direkt auf der Windschutzscheibe dargestellt werden, beispielsweise in dem Abschnitt des Maskierungsbereichs, der an die Unterkante der Windschutzscheibe grenzt. Eine Projektionsanordnung dieser Art ist beispielsweise aus DE102009020824A1 und WO2022073894A1 bekannt. Eine homogene Reflexion von Licht im Maskierungsbereich stellt andere Anforderungen an den Aufbau einer Verbundscheibe als jene bei einer HUD-Reflexion.

Die Aufgabe der vorliegenden Erfindung besteht daher darin, eine verbesserte Projektionsanordnung bereitzustellen, unter Verwendung einer Verbundscheibe, welche sowohl als Bestandteil einer klassischen HUD-Projektionsanordnung verwendet werden kann als auch einer Projektionsanordnung mit einem Maskierungsbereich, wobei für beide Arten von Projektionsanordnungen eine homogene Reflexion erzielt wird.

Die Aufgabe der vorliegenden Erfindung wird erfindungsgemäß durch eine Verbundscheibe nach Anspruch 1 gelöst. Bevorzugte Ausführungsformen gehen aus den Unteransprüchen hervor.

Die Erfindung betrifft eine Verbundscheibe für eine Projektionsanordnung mit einem HUD-Bereich (Head-Up-Display-Bereich). Die Verbundscheibe umfasst eine Außenscheibe, eine Innenscheibe und eine zwischen der Innenscheibe und der Außenscheibe angeordnete zumindest bereichsweise keilförmig ausgebildete thermoplastische Zwischenschicht. Die thermoplastische Zwischenschicht erstreckt sich vorzugsweise über die gesamte Fläche der Verbundscheibe, ist also flächig zwischen der Außenscheibe und der Innenscheibe angeordnet. Die thermoplastische Zwischenschicht ist zumindest in einem HUD-Bereich der Verbundscheibe keilförmig ausgebildet. Die thermoplastische Zwischenschicht ist also zumindest in dem Bereich keilförmig ausgebildet, in dem die thermoplastische Zwischenschicht und der HUD-Bereich in Durchsicht durch die Verbundscheibe miteinander überlappen.

Außerdem umfasst die erfindungsgemäße Verbundscheibe eine Maskierungsschicht und eine Reflexionsschicht. Die Reflexionsschicht ist zwischen der Außenscheibe und der Innenscheibe und außerhalb des HUD-Bereiches der Verbundscheibe angeordnet. Mit "außerhalb des HUD-Bereiches" ist gemeint, dass die Reflexionsschicht in Durchsicht durch die Verbundscheibe nicht mit dem HUD-Bereich überlappt. Die Reflexionsschicht ist näher als die Maskierungsschicht zur Innenscheibe hin angeordnet und ist in Draufsicht auf die Verbundscheibe, von der Innenscheibe aus gesehen, vollständig innerhalb der Maskierungsschicht angeordnet. Mit anderen Worten wird die Reflexionsschicht in Durchsicht durch die Verbundscheibe, von der Außenscheibe aus gesehen, vollständig von der Maskierungsschicht verdeckt. In Durchsicht durch die Verbundscheibe "von der Außenscheibe aus gesehen" bedeutet in Richtung von der Außenscheibe zur Innenscheibe blickend. In Durchsicht durch die Verbundscheibe "von der Innenscheibe aus gesehen" bedeutet in Richtung von der Innenscheibe zur Außenscheibe blickend.

Dass die Reflexionsschicht näher zur Innenscheibe angeordnet ist als die Maskierungsschicht bedeutet im Sinne der Erfindung, dass beim Blick durch die Verbundscheibe, von der Innenscheibe aus gesehen, die Maskierungsschicht hinter der Reflexionsschicht angeordnet ist. Die Reflexionsschicht ist also innenscheibenseitig vor der Maskierungsschicht angeordnet.

Dass die Reflexionsschicht in Durchsicht durch die Verbundscheibe von der Außenscheibe aus gesehen vollständig durch die Maskierungsschicht verdeckt ist, bedeutet im Sinne der Erfindung umgekehrt, dass die Reflexionsschicht in Durchsicht durch die Verbundscheibe blickend in Richtung von der Innenscheibe zur Außenscheibe vollständig vor der Maskierungsschicht angeordnet ist. Die Maskierungsschicht kann kongruent also deckungsgleich zur Reflexionsschicht angeordnet sein oder sich über die Fläche der Reflexionsschicht hinaus über die Fläche der Verbundscheibe erstrecken. Mit in Richtung von der Innenscheibe zur Außenscheibe oder von der Außenscheibe zur Innenscheibe blickend ist eine senkrecht zur Hauptfläche der Verbundscheibe angeordnete Blickrichtung gemeint. Im Sinne der Erfindung bedeutet die "vollständige Verdeckung eines Elements A mit einem Element B", dass die orthonormale Projektion von Element A zur Ebene von Element B vollständig innerhalb von Element B angeordnet ist.

Mit dem HUD- (Head-Up-Display-) Bereich der Verbundscheibe ist ein Bereich der Verbundscheibe gemeint, welcher dazu vorgesehen ist in einer Projektionsanordnung mit einem Projektor bestrahlt zu werden, sodass ein Head-Up-Display-Bild im HUD-Bereich angezeigt werden kann. Der HUD-Bereich ist also in einem Bereich der Verbundscheibe angeordnet, welcher transparent ist mit einem Lichttransmissionsgrad (nach ISO 9050:2003) von bevorzugt mindestens 50 %, besonders bevorzugt mindestens 70 %. Ist die Verbundscheibe beispielsweise eine Windschutzscheibe in einem Auto so ist der HUD-Bereich ein Bereich, durch welchen ein Betrachter (beispielsweise der Fahrer) auf die Straße schauen kann. Es versteht sich, dass der HUD-Bereich erfindungsgemäß nicht mit der Maskierungsschicht in Durchsicht durch die Verbundscheibe überlappt.

Die Außenscheibe weist eine von der thermoplastischen Zwischenschicht abgewandte außenseitige Oberfläche auf, welche auch gleichzeitig die Außenfläche der Verbundscheibe ist. Die Außenscheibe weist außerdem eine der thermoplastischen Zwischenschicht zugewandte innenraumseitige Oberfläche auf. Die Innenscheibe weist eine von der thermoplastischen Zwischenschicht abgewandte innenraumseitige Oberfläche auf. Die innenraumseitige Oberfläche der Innenscheibe ist zugleich die Innenfläche der Verbundscheibe. Die Innenscheibe weist zudem eine der thermoplastischen Zwischenschicht zugewandte außenseitige Oberfläche auf. Die Verbundscheibe ist dafür vorgesehen, eine äußere Umgebung von einem Innenraum, vorzugsweise einen Fahrzeuginnenraum, abzutrennen. Die außenseitige Oberfläche der Außenscheibe ist dabei dafür vorgesehen, der äußeren Umgebung zugewandt zu sein und die innenraumseitige Oberfläche der Innenscheibe ist dafür vorgesehen, dem Innenraum zugewandt zu sein.

Die Verbundscheibe weist eine umlaufende Kante auf, welche besonders bevorzugt eine Oberkante und eine Unterkante sowie zwei dazwischen verlaufende Seitenkanten mit einer linken und einer rechten Seitenkante umfasst. Mit Oberkante wird diejenige Kante bezeichnet, welche dafür vorgesehen ist, in Einbaulage nach oben zu weisen. Mit Unterkante wird diejenige Kante bezeichnet, welche dafür vorgesehen ist, in Einbaulage nach unten zu weisen. Die Oberkante wird häufig auch als Dachkante und die Unterkante als Motorkante bezeichnet. Die Verbundscheibe kann jede beliebige geeignete geometrische Form und/oder Krümmung aufweisen. Die Angaben "linke" und "rechte" beziehen sich auf die Seitenangabe bzw. Richtungsangabe für einen Betrachter, der auf die eingebaute erfindungsgemäße Verbundscheibe aus einem Innenraum blickt.

Die Maskierungsschicht kann eine opake Emaille sein oder eine opake thermoplastische Folie sein. Die Maskierungsschicht kann auch eine bereichsweise opake thermoplastische Folie und somit Bestandteil der thermoplastischen Zwischenschicht sein. Die Maskierungsschicht ist insbesondere eine dunkle, bevorzugt schwarze, Emaille, welche auf der Außenscheibe aufgebracht ist. Die Maskierungsschicht ist vorzugsweise auf der innenraumseitigen Oberfläche der Außenscheibe aufgebracht. Die Maskierungsschicht ist bevorzugt eine periphere (rahmenförmige) Schicht, welche sich entlang der umlaufenden Kante der Verbundscheibe erstreckt und im Bereich der Reflexionsschicht verbreitert sein kann. Die Maskierungsschicht dient in erster Linie als UV-Schutz für den Montagekleber der Verbundscheibe (Beispielsweise zum Einkleben in ein Fahrzeug). Die Maskierungsschicht weist vorzugsweise einen Transmissionsgrad (nach ISO 9050:2003) für sichtbares Licht von kleiner 15 %, bevorzugt kleiner 10 %, besonders bevorzugt kleiner 1 % auf. Die Maskierungsschicht kann zumindest abschnittsweise auch semitransparent, beispielsweise als Punktraster, Streifenraster oder kariertes Raster ausgebildet sein. Alternativ kann die Maskierungsschicht auch einen Gradienten aufweisen, beispielsweise von einer opaken Bedeckung zu einer semitransparenten Bedeckung. Mit "Breite" ist im Sinne der Erfindung die Ausdehnung senkrecht zur Erstreckungsrichtung gemeint.

Die Verbundscheibe kann auch mehrere, vorzugsweise zwei, Maskierungsschichten aufweisen, wobei vorzugsweise eine erste Maskierungsschicht auf der innenraumseitigen Oberfläche der Außenscheibe aufgebracht ist und eine zweite Maskierungsschicht auf der innenraumseitigen Oberfläche der Innenscheibe aufgebracht ist. Sind zwei oder mehr Maskierungsschichten Bestandteil der Verbundscheibe, so ist mit der erfindungsgemäßen "Maskierungsschicht" vorzugsweise nur eine der mehreren Maskierungsschichten gemeint.

In einer besonders bevorzugten Ausführungsform der Erfindung ist die Maskierungsschicht im umlaufenden Randbereich der Verbundscheibe rahmenförmig angeordnet und in einem zur Unterkante der Verbundscheibe benachbarten Abschnitt des umlaufenden Randbereichs verbreitert. Die Maskierungsschicht weist vorzugsweise im verbreiterten Bereich eine Breite von 10 cm oder mehr, besonders bevorzugt 20 cm oder mehr, insbesondere 30 cm oder mehr auf. Diese Ausführungsform eignet sich vor allem für die Verwendung in Fahrzeugen, in dem die Projektionsanordnung als Alternative zu im Armaturenbrett verbauten Displays verwendet werden kann. Alternativ kann die Maskierungsschicht in einem unteren Randbereich der Verbundscheibe benachbart zur Unterkante und/oder in einem oberen Randbereich der Verbundscheibe benachbart zur Oberkante aufgebracht sein.

Vorzugsweise ist die Reflexionsschicht auf der innenraumseitigen Oberfläche der Außenscheibe oder auf der außenseitigen Oberfläche der Innenscheibe aufgebracht. Ist die Maskierungsschicht auf der innenraumseitigen Oberfläche der Außenscheibe aufgebracht, ist die Reflexionsschicht bevorzugt auf der Maskierungsschicht oder der außenseitigen Oberfläche der Innenscheibe aufgebracht.

Die Reflexionsschicht kann auch als eine reflektierende Folie ausgebildet sein und innerhalb der thermoplastischen Zwischenschicht angeordnet sein. "innerhalb der thermoplastischen Zwischenschicht" bedeutet im Sinne der Erfindung, dass die Reflexionsschicht vollständig von der thermoplastischen Schicht umschlossen wird. Die Reflexionsschicht kann beispielsweise vor dem Laminierungsprozess zwischen zwei thermoplastischen Folien angeordnet sein, wobei die thermoplastischen Folien im Laminierungsprozess zur thermoplastischen Zwischenschicht verschmelzen. Alternativ kann die Reflexionsschicht mittels Wärme (vorzugsweise bei 20 °C bis 150 °C) und Druck in die thermoplastische Zwischenschicht hineingedrückt werden. Innerhalb der thermoplastischen Zwischenschicht ist die Reflexionsschicht besonders vorteilhaft vor äußerer Beschädigung oder Korrosion geschützt. Alternativ kann die Reflexionsschicht als reflektierende Folie auch mittels einer Haftschicht auf der Innenscheibe, der Maskierungsschicht oder der Außenscheibe aufgebracht sein.

Die Haftschicht, welche auch Klebeschicht genannt werden kann, weist vorzugsweise, insbesondere wenn sie zwischen Reflexionsschicht und Innenscheibe angeordnet ist, einen Lichttransmissionsgrad (nach ISO 9050:2003) von mindestens 50 %, besonders bevorzugt mindestens 70 %, auf. Die Haftschicht ist bevorzugt auf Basis von Polyurethan, Polyacrylat-Verbindungen (bspw. Polyacrylat oder Polymethylacrylat), PVB, EVA oder Silikon, besonders bevorzugt auf Basis von Polyurethan, Polyacrylat-Verbindungen (bspw. Polyacrylat oder Polymethylacrylat) oder Silikon ausgebildet. Alternativ ist die Haftschicht auf Basis von Mischungen ebendieser Materialien ausgebildet.

Die Reflexionsschicht reflektiert sichtbares Licht bevorzugt zu mindestens 40 %, besonders bevorzugt zu mindestens 70 %. Mit "reflektiert" ist im Sinne der Erfindung gemeint, dass die Reflexionsschicht sichtbares Licht reflektiert, welches auf sie auftrifft. Die Reflexion in einem bestimmten Prozentbereich bedeutet im Sinne der Erfindung einen gemittelten Reflexionsgrad bei einem definierten Einfallswinkel von 65° zur innenraumseitigen Flächennormalen. Die Reflexionsschicht ist dazu vorgesehen, ein von einem Projektor auf die Reflexionsschicht projiziertes Bild zu reflektieren. Die Reflexionsschicht kann transparent sein, ist aber bevorzugt opak.

Die Reflexionsschicht ist geeignet ausgebildet, um sichtbares Licht, in einem Wellenlängenbereich von 380 nm bis 780 nm, zu reflektieren. Die Reflexionsschicht reflektiert vorzugsweise p-polarisiertes und s-polarisiertes Licht zu gleichen Anteilen, sie können aber auch p-polarisiertes Licht und s-polarisiertes Licht unterschiedlich stark reflektieren. Die Reflexionsschicht weist vorzugsweise einen hohen und gleichmäßigen Reflexionsgrad (über verschiedene Einstrahlwinkel) gegenüber p-polarisierter und/oder s-polarisierter Strahlung auf, sodass eine intensitätsstarke und farbneutrale Bild-Darstellung gewährleistet ist. Bei der Reflexion von p-polarisiertem Licht treten weniger Geisterbilder auf und damit wird eine verbesserte visuelle Qualität des reflektierten Lichtes (beispielsweise virtuelles Bild) erzielt. Durch Beimischung von s-polarisiertem Licht kann der Reflexionsgrad erhöht werden.

Der Reflexionsgrad wird gemessen mit einem Einfallswinkel von 65° zur innenraumseitigen Flächennormalen (Flächennormale auf innenraumseitiger Oberfläche der Innenscheibe), was etwa der Bestrahlung durch übliche HUD-Projektoren entspricht. Der Spektralbereich von 380 nm bis 680 nm wurde zur Charakterisierung der Reflexionseigenschaften herangezogen, weil der optische Eindruck eines Betrachters in erster Linie durch diesen Spektralbereich geprägt wird. Außerdem deckt er die für die HUD-Darstellung relevanten Wellenlängen ab (RGB: 473 nm, 550 nm, 630 nm).

Der Reflexionsgrad beschreibt den Anteil der insgesamt eingestrahlten Strahlung, der reflektiert wird. Er wird in % angegeben (bezogen auf 100% eingestrahlte Strahlung) oder als einheitenlose Zahl von 0 bis 1 (normiert auf die eingestrahlte Strahlung). Aufgetragen in Abhängigkeit von der Wellenlänge bildet er das Reflexionsspektrum. Die Ausführungen zum Reflexionsgrad (oder Prozentangaben zur Reflexion) gegenüber p-polarisierter, unpolarisierter oder s-polarisierter Strahlung beziehen sich im Rahmen der vorliegenden Erfindung auf den Reflexionsgrad gemessen mit einem Einfallswinkel von 65° zur innenraumseitigen Flächennormalen. Die Angaben zum Reflexionsgrad beziehungsweise zum Reflexionsspektrum beziehen sich auf eine Reflexionsmessung mit einer Lichtquelle, die im betrachteten Spektralbereich gleichmäßig abstrahlt mit einer normierten Strahlungsintensität von 100%.

Die Reflexionsschicht erstreckt sich bevorzugt maximal über 50 %, besonders bevorzugt maximal über 40 %, insbesondere maximal über 20 %, der Fläche der Verbundscheibe. Besonders bevorzugt ist die Reflexionsschicht in einem oberen Randbereich der Verbundscheibe benachbart zur Oberkante und/oder in einem unteren Randbereich der Verbundscheibe benachbart zur Unterkante der Verbundscheibe angeordnet, wobei sich vorzugsweise ein beschichtungsfreier Randbereich zwischen der Reflexionsschicht und der Oberkante und/oder Unterkante befindet. Alternativ kann die Reflexionsschicht auch zusätzlich oder ausschließlich in einem lateralen Randbereich benachbart zu einer oder beiden Seitenkanten der Verbundscheibe angeordnet sein, wobei sich auch in diesem Fall vorzugsweise ein beschichtungsfreier Randbereich zwischen der Reflexionsschicht und der Seitenkante (linke und/oder rechte Seitenkante) befindet. Der beschichtungsfreie Randbereich weist bevorzugt eine Breite von kleiner 20 cm, besonders bevorzugt kleiner 10 cm, insbesondere kleiner 1 cm, auf. Die Reflexionsschicht erstreckt sich bevorzugt streifenförmig von der einen (linken) Seitenkante zur anderen (rechten) Seitenkante und ist insbesondere dabei benachbart zur Unterkante der Verbundscheibe. Die Reflexionsschicht weist bevorzugt eine Breite von mindestens 10 cm, besonders bevorzugt mindestens 20 cm, insbesondere mindestens 30 cm, auf. Die Anordnung der Reflexionsschicht in einem Randbereich benachbart zur Unterkante, linker Seitenkante, rechter Seitenkante und/oder Oberkante bietet sich insbesondere dann an, wenn die Verbundscheibe in der Form einer Fahrzeugscheibe, insbesondere Windschutzscheibe, ausgebildet ist, da so der zur Durchsicht vorgesehen Bereich der Verbundscheibe frei von der Reflexionsschicht bleibt.

Die Reflexionsschicht umfasst vorzugsweise mindestens ein Metall ausgewählt aus einer Gruppe, bestehend aus Aluminium, Magnesium, Zinn, Indium, Titan, Tantal, Niob, Nickel, Kupfer, Chrom, Cobalt, Eisen, Mangan, Zirkonium, Cer, Scandium Yttrium, Silber, Gold, Platin und Palladium, Ruthenium oder Mischungen davon. Alternativ oder zusätzlich umfasst die Reflexionsschicht Oxide, Carbide, Siliziumverbindungen und/oder Nitride ausgewählt aus einer Gruppe, bestehend aus mit Bor dotiertem Silizium, Silizium-Zirconium-Mischnitrid, Siliziumnitrid, Titanoxid, Siliziumoxid, Titancarbid, Zirconiumcarbid, Silizium-Zirconium-Aluminium oder Mischungen davon. Aluminium, Titan, Nickel-Chrom und/oder Nickel werden bevorzugt auf der Innenscheibe oder der dünnen Scheibe aufgebracht, da sie eine hohe Reflexion für p-polarisiertes oder s-polarisiertes Licht aufweisen können. Sie eignen sich somit besonders als Bestandteil einer Projektionsanordnung. Die Reflexionsschicht weist vorzugsweise eine Dicke von 10 nm (Nanometer) bis 100 µm (Mikrometer), besonders bevorzugt von 50 nm bis 50 µm, insbesondere von 100 nm bis 5 µm auf.

In einer besonderen Ausführungsform der Erfindung ist die Reflexionsschicht eine Beschichtung, enthaltend einen Dünnschichtstapel, also eine Schichtenfolge dünner Einzelschichten. Dieser Dünnschichtstapel enthält eine oder mehrere elektrisch leitfähige Schichten auf Basis von Nickel, Nickel-Chrom, Titan und/oder Aluminium. Die elektrisch leitfähige Schicht auf Basis von Nickel, Nickel-Chrom, Titan und/oder Aluminium verleiht der Reflexionsschicht grundlegende reflektierende Eigenschaften und außerdem eine IRreflektierende Wirkung und eine elektrische Leitfähigkeit. Die elektrisch leitfähige Schicht ist auf Basis von Nickel, Nickel-Chrom, Titan und/oder Aluminium ausgebildet. Die leitfähige Schicht enthält bevorzugt mindestens 90 Gew. % Nickel, Titan und/oder Aluminium, besonders bevorzugt mindestens 99 Gew. % Aluminium, ganz besonders bevorzugt mindestens 99,9 Gew. % Nickel, Titan und/oder Aluminium. Die Schicht auf Basis von Aluminium, Nickel-Chrom, Nickel und/oder Titan kann Dotierungen aufweisen, beispielsweise Palladium, Gold, Kupfer oder Silber. Materialen auf der Basis von Aluminium, Nickel, Nickel-Chrom, und/oder Titan sind besonders geeignet, um Licht, besonders bevorzugt p-polarisiertes Licht, zu reflektieren. Die Verwendung von Nickel, Nickel-Chrom, Titan und/oder Aluminium in Reflexionsschichten hat sich als besonders vorteilhaft bei der Reflexion von Licht erwiesen. Aluminium, Nickel, Nickel-Chrom, und/oder Titan sind im Vergleich zu vielen anderen Metallen wie beispielsweise Gold oder Silber deutlich günstiger. Außerdem weisen diese Metalle eine hohe chemische und thermomechanische Beständigkeit auf. Die Einzelschichten des Dünnschichtstapels weisen vorzugsweise eine Dicke von 10 nm bis 1 µm auf. Der Dünnschichtstapel weist vorzugsweise 2 bis 20 Einzelschichten und insbesondere 5 bis 10 Einzelschichten auf.

In einer ganz besonders bevorzugten Ausführungsform der Erfindung ist die Reflexionsschicht eine reflektierende Folie, die metallfrei ist und sichtbares Licht, vorzugsweise überwiegend p-polarisiertes Licht, reflektiert. Die Reflexionsschicht ist dann vorzugsweise eine Folie, die auf Basis synergetisch miteinander wirkenden Prismen und reflektierender Polarisatoren funktioniert. Die Reflexionsschicht weist vorzugsweise eine Trägerfolie auf Basis Polyvinylchlorid oder Polyethylenterephthalat auf. Auf dieser Trägerfolie werden synergetisch miteinander wirkende Prismen und reflektierende Polarisatoren aufgebracht. Derartige Folien zur Verwendung von Reflexionsschichten sind im Handel erhältlich, beispielsweise von der 3M Company. Auf diese Weise kann eine aufwendige Metallabscheidung vermieden werden. Die Reflexionsschicht ist als reflektierende Folie vorzugsweise innerhalb der thermoplastischen Zwischenschicht angeordnet.

In einer weiteren besonders bevorzugten Ausführungsform der Erfindung enthält die Reflexionsschicht
- einen dielektrischer Schichtstapel enthaltend TiO₂-Schichten und SiO₂-Schichten,
- einen dielektrischer Schichtstapel enthaltend SiZrN-Schichten und SiO₂-Schichten,
- einen Schichtstapel enthaltend Si:B-Schichten oder SiZrAl-Schichten,
- einen Schichtstapel enthaltend Si-Schichten und SiO₂-Schichten,
- einen Schichtstapel enthaltend Si-Schichten und Si₃N₄-Schichten oder
- einen karbidischer Schichtstapel enthaltend TiC-Schichten und/oder ZrC-Schichten
oder besteht aus einem oder mehreren dieser Schichtstapel. Die beschriebenen Schichtstapel weisen geeignete Reflexionseigenschaften auf, um als Teil einer Projektionsanordnung ein homogenes Bild zu erzielen. Vorzugsweise sind die beschriebenen Schichtstapel auf einer polymerischen Folie (beispielsweise auf Basis Polyethylenterephthalat (PET)) aufgebracht.

Die oben genannten gewünschten Reflexionscharakteristika der Reflexionsschicht werden insbesondere durch die Wahl der Materialien und Dicken sowie dem Aufbau der einzelnen Schichten oder Schichtenfolgen erreicht. Die Reflexionsschicht kann so geeignet eingestellt werden.

In einer besonders bevorzugten Ausführungsform der Erfindung weist die Verbundscheibe außerdem eine, vorzugsweise transparente, beheizbare Funktionsschicht auf. Die beheizbare Funktionsschicht ist vorzugsweise auf der Außenscheibe oder der Innenscheibe, insbesondere auf der außenseitigen Oberfläche der Innenscheibe oder der innenraumseitigen Oberfläche der Außenscheibe aufgebracht.

Die beheizbare Funktionsschicht erstreckt sich vorzugsweise über mehr als 50 %, bevorzugt mehr als 70 %, besonders bevorzugt mehr als 90 %, der Fläche der Verbundscheibe. Die beheizbare Funktionsschicht erstreckt sich vorzugsweise zumindest über den gesamten Bereich, welcher zur Durchsicht durch die Verbundscheibe vorgesehen ist. Damit ist der Bereich gemeint, durch welchen in der fertiggestellten Verbundscheibe und gegebenenfalls im eingebauten Zustand (beispielsweise Einbau der Verbundscheibe in ein Fahrzeug) hindurchgeblickt werden kann und der transparent ist. Insbesondere erstreckt sich die beheizbare Funktionsschicht über die gesamte Fläche der Verbundscheibe abzüglich eines umlaufenden, rahmenförmigen Randbereiches (benachbart zur umlaufenden Kante der Verbundscheibe). Der unbeschichtete umlaufende, rahmenförmige Randbereich dient der besseren Abtrennung der Funktionsschicht von der äußeren Umgebung. Die beheizbare Funktionsschicht ist hierdurch besser vor Korrosion oder mechanischer Beschädigung geschützt. Der beschichtungsfreie Randbereich weist bevorzugt eine Breite von kleiner 20 cm, besonders bevorzugt kleiner 10 cm, insbesondere kleiner 1 cm, auf.

Die beheizbare Funktionsschicht weist bevorzugt einen Lichttransmissionsgrad (nach ISO 9050:2003) für Licht im sichtbaren Spektralbereich von mindestens 50 %, bevorzugt mindestens 60 % und besonders bevorzugt mindestens 70 % auf. Weiterhin weist die heizbare Funktionsschicht einen Lichttransmissionsgrad (nach ISO 9050:2003) für Licht im sichtbaren Spektralbereich von 90 % oder kleiner, bevorzugt 80 % oder kleiner, besonders bevorzugt genau 70 % auf. "Opak" bedeutet im Sinne der Erfindung eine Lichttransmission (nach ISO 9050:2003) von weniger als 30 %, bevorzugt weniger als 20 %, besonders bevorzugt weniger als 5 % und insbesondere weniger 0,1 %. "Transparent" bedeutet im Sinne der Erfindung eine Lichttransmission (nach ISO 9050:2003) von mindestens 50 %, bevorzugt mindestens 60 % und besonders bevorzugt mindestens 70 %.

Die beheizbare Funktionsschicht ist bevorzugt geeignet ausgebildet, um Infrarotlicht zur absorbieren und/oder zu reflektieren. Dadurch wird der technische Vorteil erreicht, dass ein Eintritt von Infrarotlicht vermindert wird, womit die wärmeisolierende Wirkung der Verbundscheibe verbessert wird.

Die beheizbare Funktionsschicht enthält typischerweise eine oder mehrere, beispielsweise zwei, drei oder vier funktionelle Schichten. Die funktionellen Schichten enthalten bevorzugt zumindest ein Metall, beispielsweise Silber, Gold, Kupfer, Nickel und/oder Chrom oder eine Metalllegierung. Die funktionellen Schichten enthalten besonders bevorzugt mindestens 90 Gew. % des Metalls, insbesondere mindestens 99,9 Gew. % des Metalls. Die funktionellen Schichten können aus dem Metall oder der Metalllegierung bestehen.

In einer weiteren vorteilhaften Ausführungsform der Verbundscheibe umfasst die beheizbare Funktionsschicht mindestens eine Silberschicht und vorzugsweise mehrere Silberschichten. Solche Silberschichten weisen eine besonders vorteilhafte elektrische Leitfähigkeit bei gleichzeitiger hoher Transmission im sichtbaren Spektralbereich auf. Die Dicke einer Silberschicht beträgt bevorzugt von 5 nm bis 50 nm, besonders bevorzugt von 8 nm bis 25 nm. In diesem Bereich für die Dicke der Silberschicht wird eine vorteilhaft hohe Transmission im sichtbaren Spektralbereich und eine besonders vorteilhafte elektrische Leitfähigkeit erreicht. Vorzugsweise ist jeweils zwischen zwei benachbarten Silberschichten der Beschichtung zumindest eine dielektrische Schicht angeordnet. Bevorzugt ist unterhalb der ersten und/oder oberhalb der letzten Silberschicht eine weitere dielektrische Schicht angeordnet. Eine dielektrische Schicht enthält zumindest eine Einzelschicht aus einem dielektrischen Material, beispielsweise enthaltend ein Nitrid wie Siliziumnitrid oder ein Oxid wie Aluminiumoxid. Dielektrische Schichten können aber auch mehrere Einzelschichten umfassen, beispielsweise Einzelschichten eines dielektrischen Materials, Glättungsschichten, Anpassungsschichten, Blockerschichten und/oder Antireflexionsschichten. Die Dicke einer dielektrischen Schicht beträgt beispielsweise von 10 nm bis 200 nm. Dadurch wird beispielsweise der technische Vorteil erreicht, dass das Infrarotlicht wirksam blockiert werden kann. Die Blockierung von Infrarotlicht wird besonders gut dann erreicht, wenn die beheizbare Funktionsschicht mindestens zwei Silberschichten, besonders bevorzugt drei Silberschichten und insbesondere genau drei Silberschichten umfasst. Die beheizbare Funktionsschicht kann alternativ auch Indiumzinnoxid (ITO), fluordotiertes Zinnoxid (SnO₂:F) oder aluminiumdotiertes Zinkoxid (ZnO:Al) enthalten oder daraus bestehen.

Die geometrische Schichtdicke der beheizbaren Funktionsschicht beträgt bevorzugt höchstens 200 nm, besonders bevorzugt höchstens 100 nm, ganz besonders bevorzugt höchstens 15 nm. Dadurch kann eine vorteilhafte Reflektivität im IR-Bereich erreicht werden, ohne die Transmission zu stark herabzusetzen. Die geometrische Schichtdicke der Silberschicht beträgt bevorzugt mindestens 6 nm, besonders bevorzugt mindestens 8 nm.

Dünnere Silberschichten können zu einer Entnetzung des Schichtaufbaus führen. Besonders bevorzugt beträgt die geometrische Schichtdicke der Silberschicht von 10 nm bis 14 nm insbesondere von 11 nm bis 13 nm.

Ist von dünnen Schichten die Rede, also Schichten mit einer Dicke von unter 1000 nm, gilt: ist etwas "auf Basis" eines Materials ausgebildet, so besteht es mehrheitlich aus diesem Material, insbesondere im Wesentlichen aus diesem Material neben etwaigen Verunreinigungen oder Dotierungen. Die Angabe von Schichtdicken oder Dicken beziehen sich, sofern nicht anders angegeben, auf die geometrische Dicke einer Schicht.

In einer besonders bevorzugten Ausführungsform der Erfindung ist die beheizbare Funktionsschicht mittels mindestens zwei Sammelleitern elektrisch kontaktiert, sodass beim Anlegen einer Gleichspannung, unter Berücksichtigung des elektrischen Widerstandes zwischen den Sammelleitern, ein elektrischer Heizstrom durch die beheizbare Funktionsschicht fließt. Die Sammelleiter sind vorzugsweise in gegenüberliegenden Randbereichen der beheizbaren Funktionsschicht angeordnet.

Es ist auch möglich, dass mehr als zwei Sammelleiter elektrisch mit der beheizbaren Funktionsschicht kontaktiert sind. Besonders bevorzugt sind drei Sammelleiter mit der beheizbaren Funktionsschicht elektrisch kontaktiert, wobei die Sammelleiter flächig voneinander beabstandet auf der beheizbaren Funktionsschicht angeordnet sind. Die Sammelleiter werden dabei so angeordnet, dass sich zwischen jeweils zwei Sammelleitern ein Heizbereich ausbildet, wobei die beheizbare Funktionsschicht insgesamt zwei Heizbereiche aufweist. Ein Heizbereich kann sich beispielsweise über den zur Durchsicht vorgesehenen Bereich der Verbundscheibe erstrecken, wobei der andere Heizbereich im Bereich der Reflexionsschicht angeordnet ist. Auf diese Weise lassen sich der Durchsichtbereich und der Bereich der Reflexionsschicht unabhängig voneinander erwärmen. Es wird außerdem weniger Energie verbraucht, da der elektrische Widerstand mit dem Abstand der Sammelleiter zueinander zunimmt.

Grundsätzlich kann die Reflexionsschicht und gegebenenfalls die beheizbare Funktionsschicht durch physikalische oder chemische Gasphasenabscheidung, also eine PVD- oder CVD-Beschichtung (PVD: *physical vapour deposition, CVD: chemical vapour deposition)* sein, oder beispielsweise mittels des Sol-Gel-Verfahrens aufgebracht werden. Solche Beschichtungen lassen sich mit besonders hoher optischer Qualität und mit besonders geringer Dicke erzeugen. Sind die Reflexionsschicht und die gegebenenfalls vorhandene beheizbare Funktionsschicht ein Schichtstapel werden die einzelnen Schichten des Schichtstapels konsekutiv, also nacheinander, aufgebracht. Die Aufbringung von Schichten mittels des Sol-Gel-Verfahrens ist dem Fachmann bekannt und kann beispielsweise aus WO2021209201A1 entnommen werden.

Eine PVD-Beschichtung kann eine durch Kathodenzerstäubung aufgebrachte ("aufgesputterte") Beschichtung, insbesondere eine durch magnetfeldunterstützte Kathodenzerstäubung aufgebrachte (Magnetronsputtern) Beschichtung sein. Vorzugsweise werden die Reflexionsschicht und die gegebenenfalls vorhandene beheizbare Funktionsschicht durch Magnetronsputtern aufgebracht. Mittels Magnetronsputtern kann eine homogene und wenige Nanometer dicke Schicht effizient erstellt werden.

Wird die Reflexionsschicht und die gegebenenfalls vorhandene beheizbare Funktionsschicht mittels chemischer Gasphasenabscheidung aufgebracht, dann erfolgt dies vorzugsweise mittels plasmaunterstützter chemischer Gasphasenabscheidung (PECVD), insbesondere findet diese Herstellung bei atmosphärischem Druck statt (APCVD). Der Vorteil plasmagestützten chemischen Gasphasenabscheidung ist die Geschwindigkeit der Aufbringung bei gleichzeitig hoher Homogenität der Schichten im Vergleich zu vielen anderen Verfahren. Im Besonderen Siliziumoxid lässt sich mittels dieser Herstellung homogen und effizient auf einem Substrat aufbringen.

Die Reflexionsschicht wird bevorzugt durch physikalische Gasphasenabscheidung (PVD) auf eine Folie oder auf die außenseitige Oberfläche der Innenscheibe aufgebracht, besonders bevorzugt durch Kathodenzerstäubung ("Sputtern"), ganz besonders bevorzugt durch magnetfeldunterstütze Kathodenzerstäubung ("Magnetronsputtern"). Die Reflexionsschicht wird bevorzugt vor der Lamination aufgebracht.

Die Außenscheibe und die Innenscheibe sind bevorzugt aus transparentem Glas, insbesondere aus Kalk-Natron-Glas, was für Fensterscheiben üblich ist. Die Scheiben können grundsätzlich aber auch aus anderen Glasarten (beispielsweise Borosilikatglas, Quarzglas, Aluminosilikatglas) oder transparenten Kunststoffen (beispielsweise Polymethylmethacrylat oder Polycarbonat) gefertigt sein. Die Dicke der Außenscheibe und der Innenscheibe kann breit variieren. Vorzugsweise werden Scheiben mit einer Dicke im Bereich von 0,8 mm bis 5 mm, bevorzugt von 1,4 mm bis 2,5 mm verwendet, beispielsweise die mit den Standarddicken 1,6 mm oder 2,1 mm. Die Außenscheibe und die Innenscheiben können unabhängig voneinander nicht vorgespannt, teilvorgespannt oder vorgespannt sein. Soll mindestens eine der Scheiben eine Vorspannung aufweisen, so kann dies eine thermische oder chemische Vorspannung sein.

Die Außenscheibe, die Innenscheibe und die Verbundscheibe können eine beliebige dreidimensionale Form aufweisen. Vorzugsweise haben die Innenscheibe und die Außenscheibe keine Schattenzonen, so dass sie effizient durch Kathodenzerstäubung beschichtet werden können. Bevorzugt sind die Innenscheibe und Außenscheibe und somit auch die Verbundscheibe plan oder leicht oder stark in eine Richtung oder in mehrere Richtungen des Raumes gebogen

Die zumindest bereichsweise keilförmig ausgebildete thermoplastische Zwischenschicht ist bevorzugt als mindestens eine thermoplastische Verbundfolie ausgebildet und ist auf Basis von Ethylenvinylacetat (EVA), Polyvinylbutyral (PVB) oder Polyurethan (PU) oder Gemische oder Copolymere oder Derivate davon, besonders bevorzugt auf Basis von Polyvinylbutyral (PVB) und zusätzlich dem Fachmann bekannte Additive wie beispielsweise Weichmacher ausgebildet. Bevorzugt enthält die thermoplastische Folie mindestens einen Weichmacher.

Die zumindest bereichsweise thermoplastische Zwischenschicht kann durch eine einzelne zumindest bereichsweise keilförmige Folie ausgebildet sein oder auch durch mehr als eine Folie, wobei mindestens eine der Folien zumindest bereichsweise keilförmig ist. Die thermoplastische Zwischenschicht kann durch eine oder mehrere übereinander angeordnete thermoplastische Folien ausgebildet werden, wobei die Dicke der thermoplastischen Zwischenschicht nach der Lamination des Schichtstapels bevorzugt von 0,25 mm bis 1 mm beträgt, typischerweise 0,38 mm oder 0,76 mm. Die thermoplastische Zwischenschicht kann auch aus einer Folie ausgebildet sein, die bereichsweise gefärbt und damit opak ist. Die Maskierungsschicht kann auch ein Bestandteil der thermoplastischen Zwischenschicht sein. Die Zwischenschicht kann auch aus mehr als einer Folie ausgebildet sein und die mindestens zwei Folien sich über unterschiedliche Bereiche der Fläche der Verbundscheibe erstrecken. Bei einer keilförmigen Zwischenschicht wird die Dicke an der dünnsten Stelle bestimmt, typischerweise an der Unterkante der Verbundscheibe.

Die thermoplastische Zwischenschicht kann auch eine funktionale thermoplastische Folie sein, insbesondere eine Folie mit akustisch dämpfenden Eigenschaften, eine Infrarotstrahlung reflektierende Folie, eine Infrarotstrahlung absorbierende Folie und/oder eine UV-Strahlung absorbierende Folie. So kann die thermoplastische Zwischenschicht beispielsweise auch eine Bandfilterfolie sein.

Ist etwas "auf Basis" eines polymerischen Materials ausgebildet, so besteht es mehrheitlich, also zu mindestens 50 %, vorzugsweise zu mindestens 60 % und insbesondere zu mindestens 70%, aus diesem Material. Es kann also noch weitere Materialien wie beispielsweise Stabilisatoren oder Weichmacher enthalten.

Durch die zumindest bereichsweise keilförmige thermoplastische Zwischenschicht ist die Verbundscheibe derart ausgebildet, dass Geisterbilder bei der Projektion eines Bildes auf die Reflexionsschicht oder den HUD-Bereich weitestgehend vermieden werden können. Durch die Keilfolie können die HUD-Bilder, die durch die Reflexionen an der außenseitigen Oberfläche der Innenscheibe und der Außenscheibe entstehen, einander überlagert oder angenähert werden, wodurch das Schicht-Geisterbild vermieden oder zumindest reduziert wird. Vorzugsweise weist die Verbundscheibe eine Antireflexionsbeschichtung auf, welche auf der innenraumseitigen Oberfläche der Innenscheibe aufgebracht ist. Die Antireflexionsbeschichtung unterdrückt gleichsam die Reflexion an der innenraumseitigen Oberfläche, so dass die Projektion eines Bildes nur an der außenseitigen Oberfläche signifikant reflektiert wird. Die Antireflexionsbeschichtung erstreckt sich bevorzugt mindestens über den HUD-Bereich der Verbundscheibe, besonders bevorzugt über mindestens 50 % der Fläche der Verbundscheibe und insbesondere über die gesamte Fläche der Verbundscheibe

Mit "keilförmiger oder bereichsweise keilförmiger ausgebildeter thermoplastischer Zwischenschicht" ist im Sinne der Erfindung gemeint, dass die thermoplastische Schicht in einer Querschnittansicht in einem Bereich oder vollständig die Form eines Keiles aufweist. Die thermoplastische Schicht weist dort keine konstante Schichtdicke, sondern eine variable Schichtdicke mit einem dickeren ersten Ende und einem dünneren zweiten Ende. Der Winkel zwischen den beiden Oberflächen im keilförmigen Bereich der Zwischenschicht wird als Keilwinkel bezeichnet. Ist der Keilwinkel nicht konstant, so sind zu seiner Messung an einem Punkt die Tangenten an die Oberflächen heranzuziehen.

Die Zwischenschicht ist zumindest im HUD-Bereich keilförmig oder keilartig ausgebildet. Der Keilwinkel kann im vertikalen Verlauf konstant sein, was zu einer linearen Dickenänderung der Zwischenschicht führt, wobei die Dicke typischerweise von unten nach oben größer wird.

Die Richtungsangabe "von unten nach oben" bezeichnet die Richtung von Unterkante zu Oberkante, also den vertikalen Verlauf. Es können aber auch komplexere Dickenprofile vorliegen, bei denen der Keilwinkel von unten nach oben veränderlich (das heißt im vertikalen Verlauf ortsabhängig) ist, linear oder nicht-linear.

Zusätzlich zu einer Keilfolie in der Zwischenschicht kann grundsätzlich auch eine keilartige Außenscheibe zum Einsatz kommen, um die Reflexionsflächen gegeneinander anzuwinkeln.

Der Keilwinkel ist geeignet gewählt, um die Projektionsbilder, die durch die Reflexionen an der außenseitigen Oberfläche der Innenscheibe einerseits und an der außenseitigen Oberfläche der Außenscheibe andererseits hervorgerufen werden, einander zu überlagern oder zumindest deren Abstand zueinander zu reduzieren. Im Falle paralleler Reflexionsflächen würden Bild (erzeugt durch Reflexion an der außenseitigen Oberfläche der Außenscheibe) und Geisterbild (erzeugt durch Reflexion der außenseitigen Oberfläche der Innenscheibe) versetzt zueinander erscheinen, was für den Betrachter störend ist. Durch den Keilwinkel wird das Geisterbild im Wesentlichen mit dem Bild räumlich überlagert, so dass der Betrachter nur noch ein einziges Bild wahrnimmt oder der Abstand zwischen Bild und Geisterbild zumindest reduziert wird. Typische Keilwinkel liegen im Bereich von 0,3 mrad bis 0,7 mrad, insbesondere von 0,4 mrad bis 0,5 mrad. Keilfolien mit kleineren Keilwinkeln sind einfacher und kostengünstiger herstellbar. Ist der Keilwinkel nicht konstant, also variabel, über den keilförmigen Bereich der thermoplastischen Zwischenschicht so kann er ortsabhängig unterschiedliche Keilwinkel aufweisen, die aber alle innerhalb des angegebenen Bereiches sind. Die angegebenen Ober- und Unterwerte sind somit als Grenzwerte zu verstehen. Mit anderen Worten: Der variable Keilwinkel ist ortsabhängig unterschiedlich, wobei er aber nirgends oberhalb oder unterhalb des angegebenen Bereiches liegt.

Die thermoplastische Zwischenschicht ist zumindest im HUD-Bereich keilförmig ausgebildet, dadurch kann sichtbares Licht eines Projektors ohne oder weitestgehend ohne Geisterbilder reflektiert werden.

Die Verbundscheibe kann Bestandteil einer Projektionsanordnung sein, wobei der HUD-Bereich der Verbundscheibe mit einem Projektor bestrahlt werden kann und die Reflexionsschicht mit einem weiteren Projektor bestrahlt werden kann. Der Projektor und der weitere Projektor projizieren hierbei vorzugsweise ein virtuelles Bild auf die Reflexionsschicht bzw. den HUD-Bereich. Durch die unterschiedlichen Reflexionseigenschaften kann ein homogenes Bild sowohl im HUD-Bereich auf der außenseitigen Oberfläche der Außenscheibe als auch außerhalb des HUD-Bereiches auf der Reflexionsschicht erzielt werden. Dies ist ein großer Vorteil der Erfindung. Wird der HUD-Bereich mittels eines Projektors bestrahlt, werden bevorzugt bis zu 30 %, besonders bevorzugt bis zu 20 %, insbesondere bis zu 15 % des auf den HUD-Bereich auftreffenden sichtbaren Lichtes (Strahlung) des Projektors reflektiert.

Ein weiterer Aspekt der Erfindung betrifft eine Projektionsanordnung, umfassend eine erfindungsgemäße Verbundscheibe, einen Projektor, welcher ein Bild in Form von sichtbarer Strahlung (sichtbares Licht), vorzugsweise über die Innenscheibe, auf den HUD-Bereich der Verbundscheibe projiziert, und einem weiteren Projektor, welcher ein Bild in Form von sichtbarer Strahlung (sichtbares Licht), vorzugsweise über die Innenscheibe, auf die Reflexionsschicht projiziert. Mit anderen Worten: der jeweilige Projektor bestrahlt den HUD-Bereich bzw. die Reflexionsschicht mit sichtbarem Licht, wobei die Reflexionsschicht und die Außenscheibe sowie Innenscheibe das sichtbare Licht zumindest teilweise reflektiert. Der Projektor und der weitere Projektor sind vorzugsweise der innenraumseitigen Oberfläche der Innenscheibe zugewandt. Ist die Verbundscheibe in einem eingebauten Zustand (beispielsweise als Windschutzscheibe in einem Fahrzeug) so bestrahlen der Projektor und der weitere Projektor die Reflexionsschicht bzw. den HUD-Bereich von einem Innenraum (Fahrzeuginnenraum) aus.

Die Strahlung des Projektors und des weiteren Projektors weist unabhängig voneinander bevorzugt einen p-polarisierten Anteil > 0% auf. Grundsätzlich kann der p-polarisierte Anteil auch 100% betragen, die Projektoren also rein p-polarisierte Strahlung aussenden. Für die Gesamtintensität des HUD-Bildes ist es jedoch vorteilhaft, wenn die Strahlung des Projektors sowohl s-polarisierte als auch p-polarisierte Anteile aufweist. In diesem Fall werden die p-polarisierten Strahlungsanteile effizient von der Reflexionsschicht reflektiert und die s-polarisierten Strahlungsanteile von den Scheibenoberflächen. Das Verhältnis von p-polarisierten Strahlungsanteilen zu s-polarisierten Strahlungsanteilen kann frei gewählt werden gemäß den Erfordernissen im Einzelfall. Der Anteil von p-polarisierter Strahlung an der Gesamtstrahlung des Projektors und/oder des weiteren Projektors beträgt beispielsweise von 10% bis 100%, bevorzugt von 10% bis 90%. In einer besonders vorteilhaften Ausgestaltung beträgt der Anteil p-polarisierter Strahlung des Projektors und/oder des weiteren Projektors dabei mindestens 50 %, also von 50% bis 90%, bevorzugt von 60% bis 80%, wodurch insbesondere sichergestellt ist, dass ein Fahrer mit polarisationsselektiver Sonnenbrille ein intensitätsstarkes Bild wahrnehmen kann. In einer besonders vorteilhaften Ausgestaltung ist die Strahlung des weiteren Projektors im Wesentlichen rein p-polarisiert - der p-polarisierte Strahlungsanteil beträgt also 100% oder weicht nur unwesentlich davon ab. Hierdurch werden Doppelbilder weitestgehend verhindert.

Die Angabe der Polarisationsrichtung bezieht sich dabei auf die Einfallsebene der Strahlung auf der Verbundscheibe. Mit p-polarisierter Strahlung wird eine Strahlung bezeichnet, deren elektrisches Feld in der Einfallsebene schwingt. Mit s-polarisierter Strahlung wird eine Strahlung bezeichnet, deren elektrisches Feld senkrecht zur Einfallsebene schwingt. Die Einfallsebene wird durch den Einfallsvektor und die Flächennormale der Verbundscheibe im geometrischen Zentrum des bestrahlten Bereichs aufgespannt.

Ist die Projektionsanordnung ein Bestandteil eines Fahrzeugs, sind der Projektor und der weitere Projektor vorzugsweise im Armaturenbrett des Fahrzeugs angeordnet. Das vom weiteren Projektor auf die Reflexionsschicht projizierte Bild und das vom Projektor auf den HUD-Bereich der Verbundscheibe projizierte Bild werden hierbei in den Fahrzeuginnenraum, beispielsweise in das Blickfeld eines Insassen, reflektiert. Aufgrund der Reflexionsschicht, welche vor der Maskierungsschicht angeordnet ist, kann das auf die Reflexionsschicht projizierte Bild visuell mit einem hohen Kontrast wahrgenommen werden. Hierdurch können Projektoren mit einem niedrigeren Energiebedarf eingesetzt werden. Im Vergleich zu Projektoren für klassische Head-Up-Displays kann der Energiebedarf des Projektors um bis zu 80 % reduziert werden.

Der Projektor und/oder der weitere Projektor sind vorzugsweise ein Liqiud-crystal- (LCD-) Display, Thin-Film-Transistor- (TFT-) Display, Light-Emitting-Diode- (LED-) Display, Organic-Light-Emitting-Diode- (OLED-) Display, Electroluminescent- (EL-) Display oder microLED-Display.

Wie bei HUDs und auf einer ähnlichen Technologie basierenden Projektionsanordnungen üblich bestrahlt der Projektor und der weitere Projektor, insbesondere mit einer p-polarisierten Strahlung im Wellenlängenbereich von 380 nm bis 780 nm, die Reflexionsschicht bzw. den HUD-Bereich der Verbundscheibe. Gemeint ist also, dass eine Projektionsfläche der Reflexionsschicht bzw. der Verbundscheibe mit dem weiteren Projektor bzw. dem Projektor bestrahlt werden. Die p-polarisierte und/oder s-polarisierte Strahlung wird im Bereich der Projektionsfläche in Richtung eines Betrachters reflektiert, wodurch ein virtuelles Bild erzeugt wird, welches der Betrachter von ihm ausgesehen hinter der Verbundscheibe wahrnimmt (Im Fall einer HUD). Die Strahlrichtung des Projektors und/oder des weiteren Projektors kann typischerweise durch Spiegel variiert werden, insbesondere vertikal, um die Projektion an die Körpergröße des Betrachters anzupassen. Der Bereich, in dem sich die Augen des Betrachters bei gegebener Spiegelstellung befinden müssen, wird als Eyeboxfenster bezeichnet. Dieses Eyeboxfenster kann durch Verstellung der Spiegel vertikal verschoben werden, wobei der gesamte dadurch zugängliche Bereich (das heißt die Überlagerung aller möglichen Eyeboxfenster) als Eyebox bezeichnet wird. Ein innerhalb der Eyebox befindlicher Betrachter kann das virtuelle Bild wahrnehmen. Damit ist natürlich gemeint, dass sich die Augen des Betrachters innerhalb der Eyebox befinden müssen, nicht etwa der gesamte Körper.

Die hier verwendeten Fachbegriffe aus dem Bereich der HUDs sind dem Fachmann allgemein bekannt. Für eine ausführliche Darstellung sei auf die Dissertation "Simulationsbasierte Messtechnik zur Prüfung von Head-Up Displays" von Alexander Neumann am Institut für Informatik der Technischen Universität München (München: Universitätsbibliothek der TU München, 2012) verwiesen, insbesondere auf Kapitel 2 "Das Head-Up Display".

Die vorstehenden Ausführungen und bevorzugten Ausgestaltungen im Zusammenhang mit der Verbundscheibe oder der Projektionsanordnung gelten für das Verfahren gleichermaßen. Die nachstehenden Ausführungen und bevorzugten Ausgestaltungen im Zusammenhang mit dem erfindungsgemäßen Verfahren gelten für die Verbundscheibe und Projektionsanordnung gleichermaßen.

Ein weiterer Aspekt der Erfindung betrifft ein Verfahren zur Herstellung der erfindungsgemäßen Verbundscheibe. Die Verfahrensschritte umfassen, vorzugsweise in der angegebenen Reihenfolge, die folgenden Verfahrensschritte:
(A) ein Schichtstapel aus der Außenscheibe, der thermoplastischen Zwischenschicht (4), der Maskierungsschicht und der Innenscheibe bereitgestellt wird,
(B) die Reflexionsschicht zwischen der Außenscheibe und der Innenscheibe, bevorzugt innerhalb der thermoplastischen Zwischenschicht, angeordnet wird und
(C) der Schichtstapel zu der Verbundscheibe laminiert wird.

Die Lamination des Schichtstapels erfolgt unter Einwirkung von Hitze, Vakuum und/oder Druck, wobei die einzelnen Schichten durch mindestens eine thermoplastische Folie miteinander verbunden (laminiert) werden. Es können an sich bekannte Verfahren zur Herstellung einer Verbundscheibe verwendet werden. Es können beispielsweise sogenannte Autoklav-Verfahren bei einem erhöhten Druck von etwa 10 bar bis 15 bar und Temperaturen von 130 °C bis 145 °C über etwa 2 Stunden durchgeführt werden. An sich bekannte Vakuumsack- oder Vakuumringverfahren arbeiten beispielsweise bei etwa 200 mbar und 130 °C bis 145 °C. Der Schichtstapel kann auch in einem Kalander zwischen mindestens einem Walzenpaar zu einer Verbundscheibe gepresst werden. Anlagen dieser Art sind zur Herstellung von Verbundscheiben bekannt und verfügen normalerweise über mindestens einen Heiztunnel vor einem Presswerk. Die Temperatur während des Pressvorgangs beträgt beispielsweise von 40 °C bis 150 °C. Kombinationen von Kalander- und Autoklavverfahren haben sich in der Praxis besonders bewährt. Alternativ können Vakuumlaminatoren eingesetzt werden. Diese bestehen aus einer oder mehreren beheizbaren und evakuierbaren Kammern, in denen die Außenscheibe und die Innenscheibe innerhalb von beispielsweise etwa 60 Minuten bei verminderten Drücken von 0,01 mbar bis 800 mbar und Temperaturen von 80 °C bis 170 °C laminiert werden können.

Die erfindungsgemäße Verbundscheibe kann beispielsweise die Dachscheibe, Windschutzscheibe, Seitenscheibe oder Heckscheibe eines Fahrzeugs oder eine andere Fahrzeugverglasung sein, beispielsweise eine Trennscheibe in einem Fahrzeug, bevorzugt in einem Schienenfahrzeug, einem Auto oder einem Bus. Alternativ kann die Verbundscheibe eine Architekturverglasung, beispielsweise in einer Außenfassade eines Gebäudes oder eine Trennscheibe im Innern eines Gebäudes, oder ein Einbauteil in Möbeln oder Geräten sein.

Die Erfindung wird nachfolgend anhand von Ausführungsbeispielen näher erläutert, wobei Bezug auf die beigefügten Figuren genommen wird. Die Figuren sind schematische Darstellungen und nicht maßstabsgetreu. Die Figuren schränken die Erfindung in keiner Weise ein. Es zeigen:
- Figur 1: eine Ausführungsform der erfindungsgemäßen Verbundscheibe in einer Draufsicht,
- Figur 2: eine Querschnittansicht einer Projektionsanordnung mit der Verbundscheibe aus Figur 1,
- Figur 3: ein vergrößerter unterer Randbereich der Projektionsanordnung aus Figur 2 in einer Querschnittansicht und
- Figur 4: ein vergrößerter HUD-Bereich der Projektionsanordnung aus Figur 2 in einer Querschnittansicht und
- Figur 5-6: weitere Ausführungsformen der erfindungsgemäßen Verbundscheibe in einer Projektionsanordnung in einer Querschnittansicht.

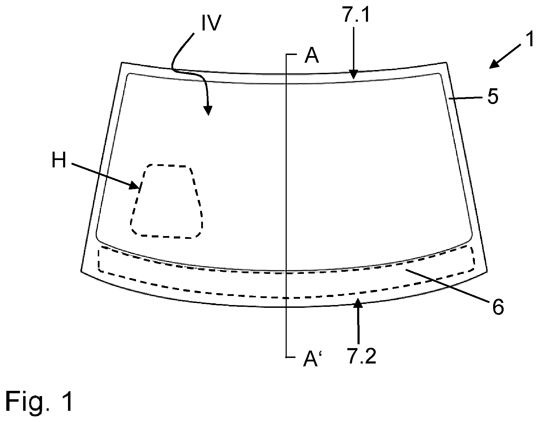

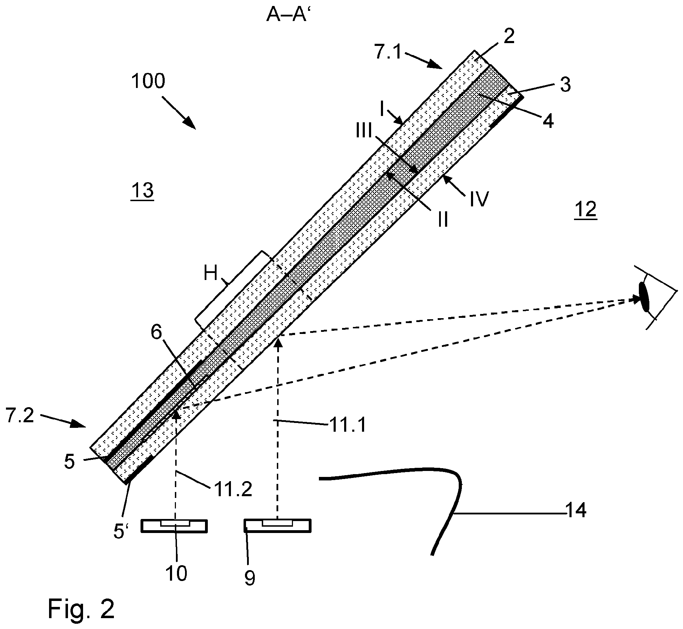

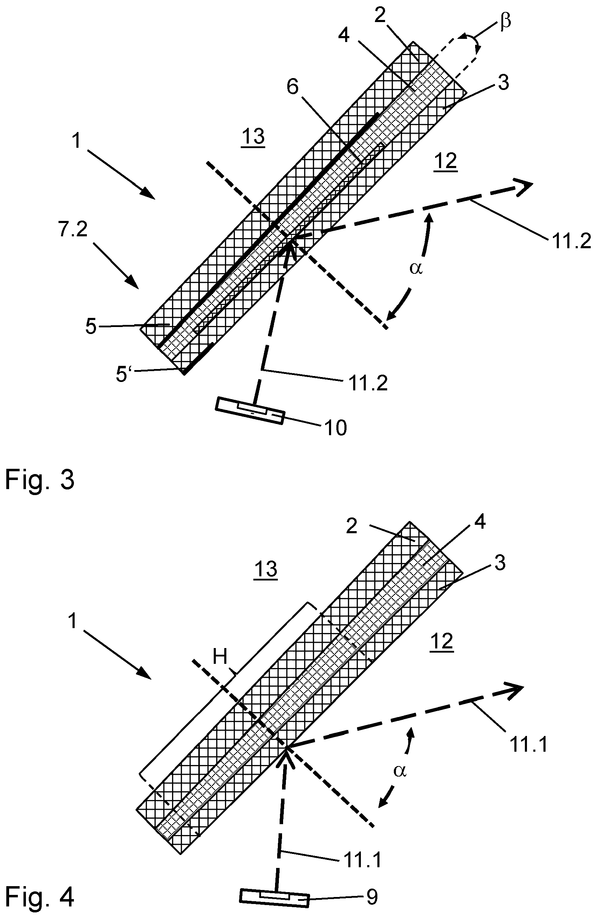

Die Figuren 1 bis 4 zeigen unterschiedliche Aspekte einer Ausgestaltung der erfindungsgemäßen Verbundscheibe 1. Die Figur 1 zeigt die erfindungsgemäße Verbundscheibe 1 in der Form einer Windschutzscheibe für ein Fahrzeug. Die Verbundscheibe 1 ist in einer Draufsicht gezeigt, wobei auf eine innenraumseitige Oberfläche IV der Verbundscheibe 1 geblickt wird. Die Figur 2 zeigt die Verbundscheibe 1 als Bestandteil einer erfindungsgemäßen Projektionsanordnung 100 in einer Querschnittansicht, wobei die Projektionsanordnung 100 in ein Fahrzeug eingebaut ist. Die Querschnittansicht der Figur 2 entspricht der Schnittlinie A-A' der Verbundscheibe 1, wie in Figur 1 angedeutet ist. Die Figur 3 zeigt einen vergrößerten Ausschnitt der Projektionsanordnung 100 aus Figur 2, wobei der vergrößerte Ausschnitt einen unteren Randbereich 7.2 benachbart zur Unterkante der Verbundscheibe 1 zeigt. Die Figur 4 zeigt einen vergrößerten Ausschnitt der Projektionsanordnung 100 aus Figur 2, wobei ein Durchsichtbereich der Verbundscheibe 1 mit einem HUD-Bereich H gezeigt ist.

Die Verbundscheibe 1 weist eine Oberkante und eine Unterkante sowie zwei die Oberkante und die Unterkante verbindende Seitenkanten auf (alles zusammen ergibt eine umlaufende Kante der Verbundscheibe 1). Mit der Unterkante (auch Motorkante genannt) der Verbundscheibe 1 ist die Kante gemeint, welche in Einbaulage dem Boden zugewandt ist. Mit der Oberkante (auch Dachkante genannt) der Verbundscheibe 1 ist die Kante gemeint, welche in Einbaulage in ein Fahrzeug dem Fahrzeugdach zugewandt ist.

Die Verbundscheibe 1 umfasst eine Außenscheibe 2, eine Innenscheibe 3 und eine zwischen der Außenscheibe 2 und der Innenscheibe 3 angeordnete keilförmig ausgebildete thermoplastische Zwischenschicht 4. Die Außenscheibe 2 weist eine von der thermoplastischen Zwischenschicht 4 abgewandte außenseitige Oberfläche I und eine der thermoplastischen Zwischenschicht 4 zugewandte innenraumseitige Oberfläche II auf. Die Innenscheibe 3 weist eine der thermoplastischen Zwischenschicht 4 zugewandte außenseitige Oberfläche III und eine von der thermoplastischen Zwischenschicht 4 abgewandte innenraumseitige Oberfläche IV auf. Die außenseitige Oberfläche I der Außenscheibe 2 ist auch gleichzeitig die Oberfläche der Verbundscheibe 1, welche der äußeren Umgebung 13 zugewandt ist, und die innenraumseitige Oberfläche IV der Innenscheibe 3 ist auch gleichzeitig die Oberfläche der Verbundscheibe 1, welche dem Innenraum 12 des Fahrzeugs zugewandt ist. Die Verbundscheibe 1 weist beispielsweise eine für Windschutzscheiben übliche Form und Krümmung auf.

Die Außenscheibe 2 und die Innenscheibe 3 bestehen jeweils aus Glas, vorzugsweise thermisch vorgespanntem Kalk-Natron-Glas und sind für sichtbares Licht transparent. Die Außenscheibe 2 weist beispielsweise eine Dicke von 2,1 mm auf und die Innenscheibe 3 beispielseiweise eine Dicke von 1,5 mm. Die thermoplastische Zwischenschicht 4 umfasst einen thermoplastischen Kunststoff, vorzugsweise Polyvinylbutyral (PVB), Ethylenvinylacetat (EVA) und/oder Polyethylenterephthalat (PET). Die thermoplastische Zwischenschicht 4 ist keilförmig ausgebildet, wobei der dickste Bereich der Zwischenschicht 4 bei der Oberkante der Verbundscheibe 1 angeordnet ist und das dünnste Ende bei der Unterkante der Verbundscheibe 1 angeordnet ist. Der Keilwinkel β der thermoplastischen Zwischenschicht 4 beträgt beispielsweise 0,2 mrad. Im Sinne der Erfindung wäre auch eine Ausgestaltung möglich, in der die thermoplastische Zwischenschicht 4 nur im HUD-Bereich H keilförmig ausgebildet ist und ansonsten eine konstante Dicke aufweist (hier nicht gezeigt).

Auf der innenraumseitigen Oberfläche II der Außenscheibe 2 ist eine opake Maskierungsschicht 5 aufgebracht. Auf der innenraumseitigen Oberfläche IV der Innenscheibe 3 ist eine weitere opake Maskierungsschicht 5' aufgebracht. Die Maskierungsschicht 5 und die weitere Maskierungsschicht 5' erstrecken sich rahmenförmig entlang der umlaufenden Kante der Verbundscheibe 1. Die Maskierungsschicht 5 ist im unteren Randbereich 7.2 direkt angrenzend zur Unterkante der Verbundscheibe 1 im Gegensatz zum oberen Randbereich 7.1 direkt angrenzend zur Oberkante der Verbundscheibe 1 verbreitert aufgebracht. Die Maskierungsschicht 5 und die weitere Maskierungsschicht 5' sind opak und verhindern die Sicht auf innenseitig oder außenseitig der Verbundscheibe 1 angeordnete Strukturen, beispielsweise eine Kleberaupe zum Einkleben der Verbundscheibe 1 in eine Fahrzeugkarosserie. Die Maskierungsschicht 5 und die weitere Maskierungsschicht 5' bestehen aus einem herkömmlicherweise für Schwarzdrücke verwendetem, elektrisch nichtleitendem Material, beispielsweise eine schwarz eingefärbte Siebdruckfarbe, die eingebrannt ist.

Die Verbundscheibe 1 weist einen HUD-Bereich H auf, welcher dazu vorgesehen ist, ein Head-Up-Display-Bild für einen Fahrer oder Passagier des Fahrzeugs anzuzeigen. Der HUD-Bereich H ist im Durchsichtbereich der Verbundscheibe 1 angeordnet, sodass ein auf den HUD-Bereich H projiziertes Bild für einen Betrachter so wahrgenommen werden kann, als wenn es hinter der Verbundscheibe 1 (also in der äußeren Umgebung 13) erscheinen würde (HUD-Technologie).

Bereichsweise ist auf der außenseitigen Oberfläche III der Innenscheibe 3 eine opake Reflexionsschicht 6 aufgebracht. Diese befindet sich überdeckend mit der Maskierungsschicht 5 im unteren Randbereich 7.2 der Verbundscheibe 1, ist also näher zur Unterkante als zur Oberkante der Verbundscheibe 1 angeordnet. Die Reflexionsschicht 6 ist in Einbaulage in ein Fahrzeug in der Umgebung zum Armaturenbrett 14 angeordnet. Die opake Reflexionsschicht 6 erstreckt sich also von der linken Seitenkante zur rechten Seitenkante der Verbundscheibe 1. Die Reflexionsschicht 6 weist beispielsweise eine Breite von 30 cm auf. Die Reflexionsschicht 6 ist zudem so angeordnet, dass sie in Durchsicht durch die Verbundscheibe 1 vom Innenraum 13 aus gesehen mit dem verbreiterten Abschnitt der Maskierungsschicht 5 vollständig überdeckt. Die Reflexionsschicht 6 ist also fahrzeuginnenraumseitig vor der Maskierungsschicht 5 angeordnet. Es versteht sich umgekehrt, dass die Maskierungsschicht 5 die Reflexionsschicht 6 vollständig, bei Durchsicht durch die Verbundscheibe 1 von der äußeren Umgebung 14 aus gesehen, verdeckt. Die opake Reflexionsschicht 6 ist außerhalb eines zur Durchsicht vorgesehenen Durchsichtbereich und des HUD-Bereiches H der Verbundscheibe 1 angeordnet. Die Reflexionsschicht 6 ist beispielsweise eine Folie auf Basis synergetisch miteinander wirkender Prismen und reflektierender Polarisatoren. Die Reflexionsschicht 6 ist beispielsweise mittels einer Haftschicht auf die außenseitige Oberfläche III der Innenscheibe 3 aufgebracht.

Alternativ kann sie auch nur auf die außenseitige Oberfläche III aufgelegt sein. Die opake Reflexionsschicht 6 ist beispielsweise geeignet ausgebildet, um sichtbares Licht mindestens zu 30 % zu reflektieren.

Auf einem Armaturenbrett 14 des Fahrzeugs sind ein Projektor 9 und ein weiterer Projektor 10 angeordnet, welche jeweils ein virtuelles Bild in der Form von sichtbarer Strahlung (Licht) 11.1, 11.2 auf die opake Reflexionsschicht 6 oder den HUD-Bereich H der Verbundscheibe 1 projizieren. Der Einstrahlwinkel α mit dem die sichtbare Strahlung 11.1, 11.2 des Projektors 9 oder des weiteren Projektors 10 auf der innenraumseitigen Oberfläche IV der Innenscheibe 3 auftrifft, beträgt beispielsweise 65°. Der Projektor 9 projiziert ein virtuelles Bild in Form von sichtbarer Strahlung 11.1 auf den HUD-Bereich H der Verbundscheibe 1. Der vom Projektor 9 bestrahlte HUD-Bereich H ist durch einen gestrichelten trapezförmigen Bereich auf der Verbundscheibe 1 in Figur 1 angedeutet. Der weitere Projektor 10 projiziert ein virtuelles Bild in Form von sichtbarer Strahlung 11.2 auf die opake Reflexionsschicht 6. Der vom weiteren Projektor 10 bestrahlte Bereich der opaken Reflexionsschicht 6 ist durch einen gestrichelten streifenförmigen Bereich auf der Verbundscheibe 1 in Figur 1 angedeutet. Die sichtbare Strahlung 11.1, 11.2 des Projektors 9 und des weiteren Projektors 10 wird an der Reflexionsschicht 6 bzw. der außenseitigen Oberfläche I der Außenscheibe 2 und der außenseitigen Oberfläche III der Innenscheibe 3 reflektiert und die reflektierte Strahlung 11.1, 11.2 wird von einem Betrachter (beispielsweise der Fahrer des Fahrzeugs) visuell wahrgenommen. Durch die keilförmige Ausgestaltung der thermoplastischen Zwischenschicht 4 werden Doppelbilder durch die doppelte Reflexion an Außenscheibe 2 und Innenscheibe 3 reduziert. Durch die Keilform der thermoplastischen Zwischenschicht 4 werden die Reflexionen an der außenseitigen Oberfläche I der Außenscheibe 2 und der außenseitigen Oberfläche III der Innenscheibe 3 miteinander in Deckung gebracht, wodurch für den Betrachter nur ein Bild erkennbar wird.

Der Projektor 9 bestrahlt einen HUD-Bereich H der Verbundscheibe 1, wodurch ein HUD-Bild (Head-Up-Display-Bild) für den Betrachter entsteht. Der weitere Projektor 10 bestrahlt die opake Reflexionsschicht 6 außerhalb des HUD-Bereiches H, welche zusätzlich vor einer Maskierungsschicht 5 angeordnet ist. Da die Reflexionsschicht 6 opak ist und vor einer opaken Maskierungsschicht 5 angeordnet ist, wird das virtuelle Bild mit einem höheren Kontrast visuell wahrnehmbar (Vergleich zu HUD-Bild). Dies ermöglicht es, Projektoren 10 mit einer geringen Lichtstärke, also einem geringeren Energieverbrauch, einzusetzen. Der Projektor 9 und der weitere Projektor 10 sind beispielsweise Leuchtdioden-Displays (LED-Display).

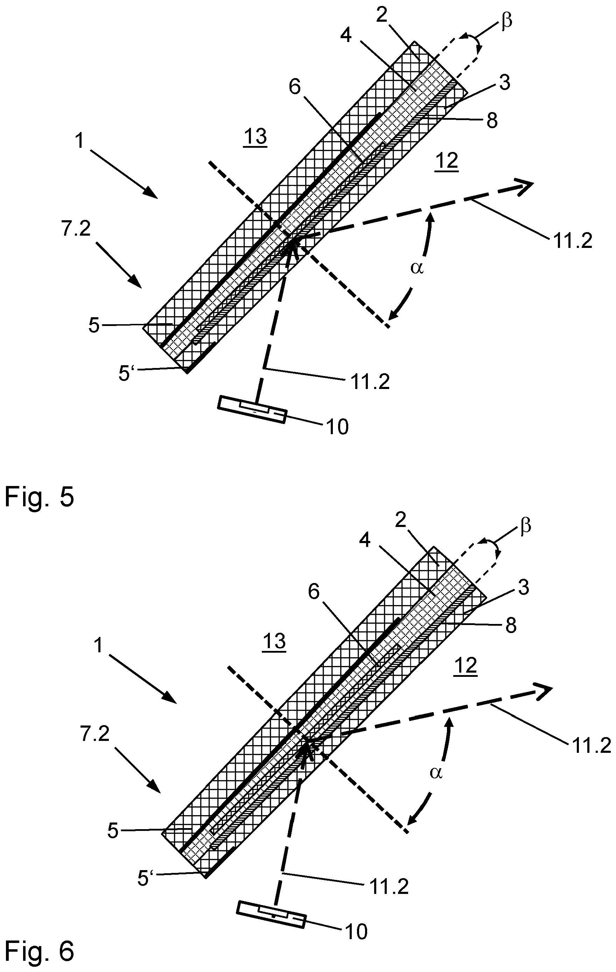

Es wird nun Bezug auf die Figuren 5 und 6 genommen, worin vergrößerte Querschnittansichten verschiedener Ausgestaltungen der Verbundscheibe 1 gezeigt sind. Die Querschnittansichten der Figuren 5 und 6 entsprechen der Schnittlinie A-A' im unteren Randbereich 7.2 angrenzend zur Unterkante der Verbundscheibe 1, wie in Figur 1 und Figur 2 angedeutet ist. Die in den Figuren 5 und 6 gezeigten Varianten entsprechen im Wesentlichen der Variante aus den Figuren 1 bis 4, sodass hier nur auf die Unterschiede eingegangen wird und ansonsten auf die Beschreibung zu den Figuren 1 bis 4 verwiesen wird.

Anders als die Variante aus den Figuren 1 bis 4, ist bei Figur 5 zusätzlich eine beheizbare Funktionsschicht 8 auf der außenseitigen Oberfläche III der Innenscheibe 3 aufgebracht. Die beheizbare Funktionsschicht 8 erstreckt sich über die gesamte außenseitige Oberfläche III der Innenscheibe 3 mit Ausnahme eines umlaufenden Randbereichs und optional lokaler Bereiche, die als Kommunikations-, Sensor- oder Kamerafenster die Transmission von elektromagnetischer Strahlung durch die Verbundscheibe 1 gewährleisten sollen (nicht gezeigt) und daher nicht mit der beheizbaren Funktionsschicht 8 versehen sind. Der umlaufende unbeschichtete Randbereich weist beispielsweise eine Breite von 2 cm auf. Er verhindert den direkten Kontakt der beheizbare Funktionsschicht 8 zur umgebenden Atmosphäre, so dass die beheizbare Funktionsschicht 8 im Innern der Verbundscheibe 1 vor Korrosion und Beschädigung geschützt ist und die Fahrzeugkarosserie elektrisch von der beheizbaren Funktionsschicht 8 isoliert ist. Die beheizbaren Funktionsschicht 8 ist beispielsweise ein Dünnschichtstapel enthaltend eine Silberschicht mit einer Schichtdicke von 15 nm.

Die Reflexionsschicht 6 ist anders als bei den Figuren 1 bis 4 nicht auf der außenseitigen Oberfläche III der Innenscheibe 3, sondern auf der beheizbaren Funktionsschicht 8 aufgebracht. Es ist alternativ auch möglich, dass die Reflexionsschicht 6 auf der außenseitigen Oberfläche III der Innenscheibe 3 aufgebracht ist und die beheizbare Funktionsschicht 8 im Bereich der Reflexionsschicht 6 auf dieser aufgebracht ist (hier nicht gezeigt).

Wie bei Figur 5 beschrieben, ist auch bei Figur 6 eine beheizbare Funktionsschicht 8 auf der außenseitigen Oberfläche III der Innenscheibe 3 aufgebracht. Die Reflexionsschicht 6 ist in dieser Ausgestaltung jedoch innerhalb der thermoplastischen Zwischenschicht 4 angeordnet. Die Reflexionsschicht 6 wird beispielsweise vor der Laminierung der Verbundscheibe 1 zwischen zwei thermoplastischen Verbundfolien angeordnet. Durch die Laminierung verschmelzen diese Verbundfolien zur thermoplastischen Zwischenschicht 4, wobei die Reflexionsschicht 6 vollständig von der thermoplastischen Zwischenschicht 4 umschlossen wird.

### Bezugszeichen

- 1: Verbundscheibe
- 2: Außenscheibe
- 3: Innenscheibe
- 4: thermoplastische Zwischenschicht
- 5: Maskierungsschicht
- 5': weitere Maskierungsschicht
- 6: Reflexionsschicht
- 7.1: oberer Randbereich der Verbundscheibe 1
- 7.2: unterer Randbereich der Verbundscheibe 1
- 8: beheizbare Funktionsschicht
- 9: Projektor
- 10: weiterer Projektor
- 11.1: sichtbare Strahlung des Projektors 9
- 11.2: sichtbare Strahlung des weiteren Projektors 10
- 12: Innenraum
- 13: äußere Umgebung
- 14: Armaturenbrett

- 100: Projektionsanordnung

- H: HUD-Bereich
- α: Einstrahlwinkel
- β: Keilwinkel der thermoplastischen Zwischenschicht 4

- I: außenseitige Oberfläche der Außenscheibe 2
- II: innenraumseitige Oberfläche der Außenscheibe 2
- III: außenseitige Oberfläche der Innenscheibe 3
- IV: innenraumseitige Oberfläche der Innenscheibe 3

- A-A': Schnittlinie

## Patentansprüche

1. Verbundscheibe (1) für eine Projektionsanordnung (100) mit einem HUD-Bereich (H), umfassend:
- eine Außenscheibe (2), eine thermoplastische Zwischenschicht (4) und eine Innenscheibe (3),
- eine Maskierungsschicht (5) und
- eine Reflexionsschicht (6),
wobei die Reflexionsschicht (6) zwischen der Außenscheibe (2) und der Innenscheibe (3) und außerhalb eines HUD-Bereiches (H) der Verbundscheibe (1) angeordnet ist,
wobei die Reflexionsschicht (6) näher als die Maskierungsschicht (5) zur Innenscheibe (3) hin angeordnet ist und in Draufsicht auf die Verbundscheibe (1), von der Innenscheibe (3) aus gesehen, vollständig innerhalb der Maskierungsschicht (5) angeordnet ist, wobei die thermoplastische Zwischenschicht (4) zumindest im HUD-Bereich (H) keilförmig ausgebildet ist.

2. Verbundscheibe (1) nach Anspruch 1, wobei die Reflexionsschicht (6) auf einer der thermoplastischen Zwischenschicht (4) zugewandten Oberfläche (III) der Innenscheibe (3) aufgebracht ist.

3. Verbundscheibe (1) nach Anspruch 1, wobei die Reflexionsschicht (6) innerhalb der thermoplastischen Zwischenschicht (4) angeordnet ist.

4. Verbundscheibe (1) nach einem der Ansprüche 1 bis 3, wobei die Reflexionsschicht (6) einen Reflexionsgrad für sichtbare Strahlung (11.2) von mindestens 40 %, bevorzugt mindestens 70 %, aufweist, bestimmt wie in der Beschreibung angegeben.

5. Verbundscheibe (1) nach einem der Ansprüche 1 bis 4, wobei die Reflexionsschicht (6) Silizium, Aluminium, Zirkonium, Nickel, Chrom, mit Bor dotiertes Silizium, Silizium-Zirconium-Mischnitrid, Siliziumnitrid, Titanoxid, Siliziumoxid, Titancarbid, Zirconiumcarbid, Silizium-Zirconium-Aluminium und/oder Mischungen davon enthält.

6. Verbundscheibe (1) nach einem der Ansprüche 1 bis 4, wobei die Reflexionsschicht (6) als eine Folie auf Basis synergetisch miteinander wirkender Prismen und reflektierender Polarisatoren ausgebildet ist.

7. Verbundscheibe (1) nach einem der Ansprüche 1 bis 6, wobei die Maskierungsschicht (5) in einem oberen oder unteren Randbereich (7.1, 7.2) der Verbundscheibe (1) angeordnet ist.

8. Verbundscheibe (1) nach einem der Ansprüche 1 bis 7, wobei eine beheizbare Funktionsschicht (8) zwischen der Außenscheibe (2) und der Innenscheibe (3) angeordnet ist.

9. Verbundscheibe (1) nach Anspruch 8, wobei die beheizbare Funktionsschicht (8) mindestens eine Silberschicht, bevorzugt zwei Silberschichten, besonders bevorzugt drei Silberschichten, umfasst.

10. Verbundscheibe (1) nach einem der Ansprüche 1 bis 9, wobei die thermoplastische Zwischenschicht (4) über die gesamte Fläche der Verbundscheibe (1) keilförmig ausgebildet ist.

11. Verbundscheibe (1) nach einem der Ansprüche 1 bis 10, wobei der Keilwinkel (β) der thermoplastischen Zwischenschicht (4) von 0,3 mrad bis 0,7 mrad, bevorzugt von 0,4 mrad bis 0,5 mrad, beträgt.

12. Projektionsanordnung (100), umfassend
- eine Verbundscheibe (1) nach einer der Ansprüche 1 bis 11,
- einen Projektor (9), welcher sichtbare Strahlung (11.1) auf den HUD-Bereich (H) der Verbundscheibe (1) projiziert und
- einen weiteren Projektor (10), welcher sichtbare Strahlung (11.2) auf die Reflexionsschicht (6) projiziert.

13. Projektionsanordnung (100) nach Anspruch 12, wobei der Anteil von p-polarisierter Strahlung an der sichtbaren Strahlung (11.1, 11.2) des Projektors (9) und des weiteren Projektors (10) von 50 % bis 90 % beträgt, bevorzugt von 60 % bis 80 %.

14. Verfahren zur Herstellung einer Verbundscheibe (1) nach einem der Ansprüche 1 bis 11, wobei
(A) ein Schichtstapel aus der Außenscheibe (2), der Maskierungsschicht (5), der thermoplastischen Zwischenschicht (4) und der Innenscheibe (3) bereitgestellt wird,
(B) die Reflexionsschicht (6) zwischen der Außenscheibe (2) und der Innenscheibe (3), bevorzugt innerhalb der thermoplastischen Zwischenschicht (4), angeordnet wird und
(C) der Schichtstapel zur Verbundscheibe (1) laminiert wird.

15. Verwendung einer Verbundscheibe (1) nach einem der Ansprüche 1 bis 11 in Fortbewegungsmitteln für den Verkehr auf dem Lande, in der Luft oder zu Wasser, bevorzugt in Kraftfahrzeugen beispielsweise als Windschutzscheibe, Heckscheibe, Seitenscheiben und/oder Glasdach, besonders bevorzugt als Dachscheibe oder als funktionales und/oder dekoratives Einzelstück und als Einbauteil in Möbeln, Geräten und Gebäuden.

## Claims

1. Laminated pane (1) for a projection arrangement (100) with a HUD region (H), the laminated pane comprising:
- an outer pane (2), a thermoplastic intermediate layer (4), and an inner pane (3),
- a masking layer (5), and
- a reflective layer (6),
wherein the reflective layer (6) is arranged between the outer pane (2) and the inner pane (3) and outside a HUD region (H) of the laminated pane (1),
wherein the reflective layer (6) is arranged closer to the inner pane (3) than the masking layer (5) is and, in a top view of the laminated pane (1) viewed from the inner pane (3), is arranged completely within the masking layer (5), wherein the thermoplastic intermediate layer (4) is wedge-shaped at least in the HUD region (H).

2. Laminated pane (1) according to claim 1, wherein the reflective layer (6) is applied to a surface (III) of the inner pane (3) facing the thermoplastic intermediate layer (4).

3. Laminated pane (1) according to claim 1, wherein the reflective layer (6) is arranged within the thermoplastic intermediate layer (4).

4. Laminated pane (1) according to any of claims 1 to 3, wherein the reflective layer (6) has a reflectance for visible radiation (11.2) of at least 40%, preferably at least 70%, determined as specified in the description.

5. Laminated pane (1) according to any of claims 1 to 4, wherein the reflective layer (6) contains silicon, aluminum, zirconium, nickel, chromium, boron-doped silicon, silicon-zirconium mixed nitride, silicon nitride, titanium oxide, silicon oxide, titanium carbide, zirconium carbide, silicon-zirconium-aluminum, and/or mixtures thereof.

6. Laminated pane (1) according to any of claims 1 to 4, wherein the reflective layer (6) is designed as a film based on synergistically interacting prisms and reflective polarizers.

7. Laminated pane (1) according to any of claims 1 to 6, wherein the masking layer (5) is arranged in an upper or lower edge region (7.1, 7.2) of the laminated pane (1).

8. Laminated pane (1) according to any of claims 1 to 7, wherein a heatable functional layer (8) is arranged between the outer pane (2) and the inner pane (3).

9. Laminated pane (1) according to claim 8, wherein the heatable functional layer (8) comprises at least one silver layer, preferably two silver layers, particularly preferably three silver layers.

10. Laminated pane (1) according to any of claims 1 to 9, wherein the thermoplastic intermediate layer (4) is wedge-shaped over the entire area of the laminated pane (1).

11. Laminated pane (1) according to any of claims 1 to 10, wherein the wedge angle (β) of the thermoplastic intermediate layer (4) is from 0.3 mrad to 0.7 mrad, preferably from 0.4 mrad to 0.5 mrad.

12. Projection arrangement (100), comprising
- a laminated pane (1) according to any of claims 1 to 11,
- a projector (9), which projects visible radiation (11.1) onto the HUD region (H) of the laminated pane (1), and
- a further projector (10), which projects visible radiation (11.2) onto the reflective layer (6).

13. Projection arrangement (100) according to claim 12, wherein the proportion of p-polarized radiation in the visible radiation (11.1, 11.2) of the projector (9) and of the further projector (10) is from 50% to 90%, preferably from 60% to 80%.

14. Method for manufacturing a laminated pane (1) according to any of claims 1 to 11, wherein
(A) a layer stack made up of the outer pane (2), the masking layer (5), the thermoplastic intermediate layer (4), and the inner pane (3) is provided,
(B) the reflective layer (6) is arranged between the outer pane (2) and the inner pane (3), preferably within the thermoplastic intermediate layer (4), and
(C) the layer stack is laminated to form the laminated pane (1).

15. Use of a laminated pane (1) according to any of claims 1 to 11 in means of transport for traffic on land, in the air, or on water, preferably in motor vehicles for example as a windshield, as a rear window, as side windows, and/or as a glass roof, particularly preferably as a roof pane or as a functional and/or decorative individual piece and as a fixture in furniture, appliances, and buildings.

## Revendications

1. Vitrage feuilleté (1) pour un agencement de projection (100) comportant une zone HUD (H), comprenant :
- une vitre externe (2), une couche intermédiaire thermoplastique (4) et une vitre interne (3),
- une couche de masquage (5), et
- une couche de réflexion (6),
dans lequel la couche de réflexion (6) est disposée entre la vitre externe (2) et la vitre interne (3) et à l'extérieur d'une zone HUD (H) du vitrage feuilleté (1),
dans lequel la couche de réflexion (6) est disposée plus près de la vitre interne (3) que la couche de masquage (5) et est disposée entièrement à l'intérieur de la couche de masquage (5) en vue de dessus sur le vitrage feuilleté (1), vu depuis la vitre interne (3), dans lequel la couche intermédiaire thermoplastique (4) est réalisée de manière cunéiforme au moins dans la zone HUD (H).

2. Vitrage feuilleté (1) selon la revendication 1, dans lequel la couche de réflexion (6) est appliquée sur une surface (III) de la vitre interne (3) qui est tournée vers la couche intermédiaire thermoplastique (4).

3. Vitrage feuilleté (1) selon la revendication 1, dans lequel la couche de réflexion (6) est disposée à l'intérieur de la couche intermédiaire thermoplastique (4).

4. Vitrage feuilleté (1) selon l'une des revendications 1 à 3, dans lequel la couche de réflexion (6) présente un facteur de réflexion du rayonnement visible (11.2) d'au moins 40 %, de préférence d'au moins 70 %, déterminé comme indiqué dans la description.

5. Vitrage feuilleté (1) selon l'une des revendications 1 à 4, dans lequel la couche de réflexion (6) contient du silicium, de l'aluminium, du zirconium, du nickel, du chrome, du silicium dopé au bore, du nitrure mixte silicium-zirconium, du nitrure de silicium, de l'oxyde de titane, de l'oxyde de silicium, du carbure de titane, du carbure de zirconium, du silicium-zirconium-aluminium et/ou leurs mélanges.

6. Vitrage feuilleté (1) selon l'une des revendications 1 à 4, dans lequel la couche de réflexion (6) est réalisée sous forme de film à base de prismes et de polariseurs réfléchissants agissant en synergie les uns avec les autres.

7. Vitrage feuilleté (1) selon l'une des revendications 1 à 6, dans lequel la couche de masquage (5) est disposée dans une zone marginale (7.1, 7.2) supérieure ou inférieure du vitrage feuilleté (1).

8. Vitrage feuilleté (1) selon l'une des revendications 1 à 7, dans lequel une couche fonctionnelle pouvant être chauffée (8) est disposée entre la vitre externe (2) et la vitre interne (3).

9. Vitrage feuilleté (1) selon la revendication 8, dans lequel la couche fonctionnelle pouvant être chauffée (8) comprend au moins une couche d'argent, de préférence deux couches d'argent, de manière particulièrement préférée trois couches d'argent.

10. Vitrage feuilleté (1) selon l'une des revendications 1 à 9, dans lequel la couche intermédiaire thermoplastique (4) est réalisée de manière cunéiforme sur toute la surface du vitrage feuilleté (1).

11. Vitrage feuilleté (1) selon l'une des revendications 1 à 10, dans lequel l'angle de tranchant (β) de la couche intermédiaire thermoplastique (4) va de 0,3 mrad à 0,7 mrad, de préférence de 0,4 mrad à 0,5 mrad.

12. Agencement de projection (100), comprenant
- un vitrage feuilleté (1) selon l'une des revendications 1 à 11,
- un projecteur (9) qui projette un rayonnement visible (11.1) sur la zone HUD (H) du vitrage feuilleté (1), et
- un autre projecteur (10) qui projette un rayonnement visible (11.2) sur la couche de réflexion (6).

13. Agencement de projection (100) selon la revendication 12, dans lequel la proportion de rayonnement polarisé p dans le rayonnement visible (11.1, 11.2) du projecteur (9) et de l'autre projecteur (10) va de 50 % à 90 %, de préférence de 60 % à 80 %.

14. Procédé de fabrication d'un vitrage feuilleté (1) selon l'une des revendications 1 à 11, dans lequel
(A) un empilement de couches constitué de la vitre externe (2), de la couche de masquage (5), de la couche intermédiaire thermoplastique (4) et de la vitre interne (3) est fourni,
(B) la couche de réflexion (6) est disposée entre la vitre externe (2) et la vitre interne (3), de préférence à l'intérieur de la couche intermédiaire thermoplastique (4), et
(C) l'empilement de couches est stratifié pour former le vitrage feuilleté (1).

15. Utilisation d'un vitrage feuilleté (1) selon l'une des revendications 1 à 11 dans des moyens de locomotion pour la circulation terrestre, aérienne ou maritime, de préférence dans des véhicules automobiles, par exemple en tant que pare-brise, lunette arrière, vitres latérales et/ou toit en verre, de manière particulièrement préférée en tant que vitre de toit ou en tant que pièce unique fonctionnelle et/ou décorative et en tant qu'élément incorporé dans des meubles, appareils et bâtiments.
